# EUROPEAN PATENT APPLICATION

(11) **EP 1 641 257 A1**
(43) Date of publication of application: **29.03.2006**
(21) Application number: 05107546.3
(22) Date of filing: 17.08.2005
(51) Int. Cl.: H04N 5/76, H04N 5/445

(54) **Image-reproducing apparatus and image-reproducing method**

(30) Priority: 28.09.2004 JP 2004282103
(71) Applicant: KABUSHIKI KAISHA TOSHIBA, Tokyo 105-8001 (JP)
(72) Inventor: Haruki, Kosuke Toshiba Corporation, Minato-ku Tokyo 105-8001 (JP)
(74) Representative: Henkel, Feiler & Hänzel

(57) **Abstract**

On receiving a fast-forward playback instruction from a remote-control manager (15), a system controller (11) determines whether the fast-forward playback speed is equal to or higher than a predetermined speed and whether the display screen should be divided into sections. If it determines that the display screen should be divided, the system controller (11) determines how many sections the screen should be divided into, in accordance with the fast-forward playback speed. The system controller (11) informs a GUI manager (12) that the display screen should be divided into sections, the number of which has been determined.

## Description

This invention relates to a technique of controlling the displaying of moving-picture data in, for example, HDD recorders or DVD recorders.

The data-compression/encoding technology has advanced in recent years. Owing to this, HDD recorders and DVD recorders, which record moving-picture data in the form of digital signals, are now used in increasing numbers, replacing video tape recorders that record moving-picture data in the form of analog signals.

With recorders of these types it is possible to edit the moving-picture data in any desired manner by processing the moving-picture data. For example, images can be reduced in size so that several images may be simultaneously displayed on the same screen. (See, for example, Jpn. Pat. Appln. KOKAI Publication No. 2002-125190.) So-called fast-forward playback, for example, may be carried out. In this case, the user can easily find any desired scene if images are displayed on the screen in time series. This can makes the recorders user-friendlier.

Most recorders developed recently have the function of switching the speed of fast-forward playback to any one of various values. If the number of images that can be displayed at the same time in the fast-forward playback is fixed, regardless of the playback speed selected by the user, the recorder will become less user-friendly.

It is earnestly demanded that only one image be displayed in full size as in the normal playback mode, if the fast-forward playback is performed at a speed as a few times as high as the normal playback speed. It is also demanded that more images be simultaneously displayed in reduced size, if the fast-forward playback is carried out at a speed as many times as high as the normal playback speed.

The present invention has been made in view of the foregoing. An object of the invention is to provide an image playback apparatus and an image playback method, which control the displaying of images in an appropriate manner in accordance with the ratio of the fast-forward-playback speed selected to the standard fast-forward-playback speed.

To achieve the object described above, an image playback apparatus, according to the invention comprises playback means for playing back encoded moving-picture data; first display means for displaying the moving-picture data played back by the playback means, using an entire display region; second display means for displaying, in time series, parts of the moving-picture data played back by the playback means, respectively in display sections into which the display region has been divided; designating means for designating a playback speed at which the playback means should play back the moving-picture data; and display control means for controlling the first and second display means so that the first display means displays the moving-picture data in the entire display region when the designating means designates a playback speed which is lower than a specific value, and the second display means displays the parts of the moving-picture data in display sections, respectively, when the designating means designates a playback speed equal to or higher than the specific value.

Additionally, an image playback method, according to the invention comprises the steps of receiving speed data representing a playback speed at which encoded moving-picture data should be played back; displaying the moving-picture data in an entire display region, when the playback speed represented by the speed data is lower than a specific value; and displaying parts of the moving-picture data, in time series, respectively in display sections prepared by dividing the display region, when the playback speed represented by the speed data is equal to or higher than the specific value.

Thus, the present invention can provide an image playback apparatus and an image playback method, which control the displaying of images in an appropriate manner in accordance with the ratio of the fast-forward-playback speed selected to the standard fast-forward-playback speed.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram illustrating a part of the hardware configuration of an HDD recorder according to an embodiment of this invention;
FIG. 2 is a diagram illustrating a part of the software configuration of the HDD recorder;
FIG. 3 is a diagram explaining how the screen is divided when the HDD recorder performs fast-forward playback;
FIG. 4 is a diagram illustrating how the mode of displaying images in the respective sections of the display screen changes with time when the HDD recorder performs fast-forward playback;
FIG. 5 is a diagram explaining how the HDD recorder can selects a playback-starting point; and
FIG. 6 is a flowchart representing the sequence of operations that the HDD recorder performs in the fast-forward playback mode.

An embodiments of the present will be described, with reference to the accompanying drawings. The embodiment is an HDD recorder that implements an image playback apparatus and an image playback method, both according to the present invention.

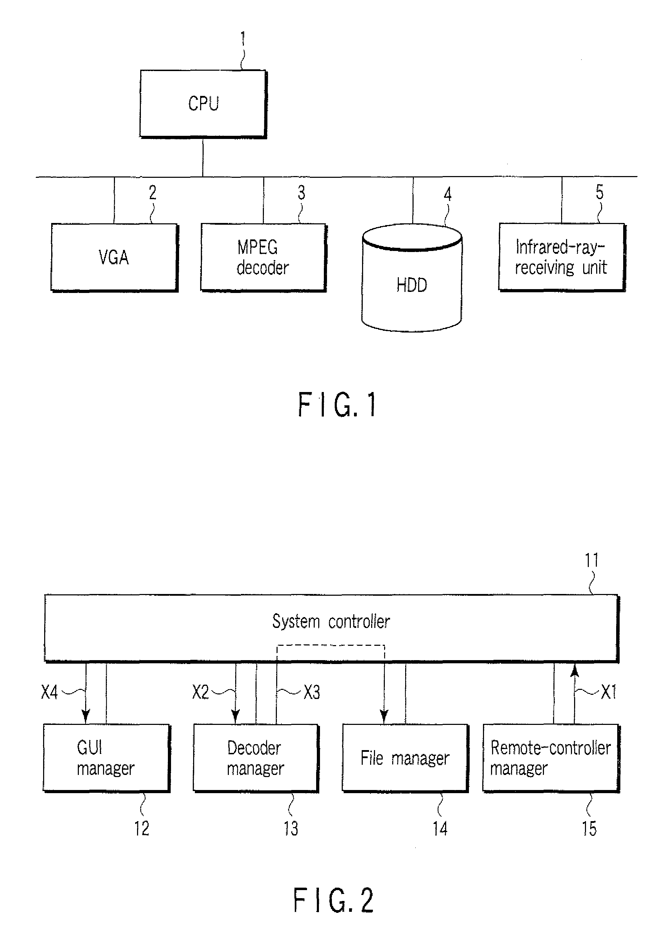

FIG. 1 is a diagram that illustrates a part of the hardware configuration of the HDD recorder, i.e., an embodiment of the invention. As FIG. 1 shows, the HDD recorder has a CPU 1, a VGA 2, a MPEG decoder 3, an HDD 4, and an infrared-ray-receiving unit 5.

The CPU 1 controls the other components of the HDD recorder, i.e., the VGA 2, MPEG decoder 3, HDD 4 and infrared-ray-receiving unit 5. The VGA 2 is a graphics circuit that controls the displaying of moving-picture data. Its basic function is to display moving-picture data in full size. In addition to the basic function, the VGA 1 has an extended function of dividing the screen into screen sections and displaying moving-picture data items sequentially, or in time series, in the screen sections, respectively.

MPEG decoder 3 is an expanding-decoding circuit that expands compressed, encoded moving-picture data. Its standard function is to playback moving-picture data at the normal playback speed. In addition to the standard function, the MPEG decoder 3 has an extended function of playing back moving-picture data at any speed designated, which is higher or lower than the normal playback speed. The HDD 4 is a data-recording medium. It can store the moving-picture data of any TV-broadcast program that has been received by a tuner (not shown) and then compressed and encoded by an MPEG encoder (not shown). The infrared-ray-receiving unit 5 receives an infrared-ray signal from the remote controller that the user operates to remote-control the HDD recorder. The information represented by the infrared-ray signal is supplied from the unit 5 to the CPU 1.

FIG. 2 is a diagram illustrating a part of the software configuration of the HDD recorder. As FIG. 2 shows, a system controller 11, a GUI manager 12, a decoder manager 13, a file manager 14 and a remote-control manager 15 operate in the HDD recorder.

The GUI manager 12 is software that controls the VGA 2. The decoder manager 13 is software that controls the MPEG decoder 3. The file manager 14 is software that controls accesses to the HDD 4. The remote-control manager 15 is software that causes the HDD recorder to receive the user's instructions from the infrared-ray-receiving unit 5. The system controller 11 is high-order software that uniquely controls the GUI manager 12, decoder manager 13, file manager 14 and remote-control manager 15.

Assume that the infrared-ray-receiving unit 5 receives an infrared-ray signal instructing that the playback speed be changed. The remote-control manager 15 recognizes this instruction and informs it to the system controller 11 (X1 of FIG. 2). On receiving the informing, the system controller 11 instructs that the moving-picture data be played back at the fast-forward playback speed to the decoder manager 13 (X2 of FIG. 2). On receiving the instruction, the decoder manager 13 generates a read demand at such intervals that the moving-picture data is read at the speed designated in the instruction, and the system controller 11 relays the read demands to the file manager 14 (X3 of FIG. 2). The decoder manager 13 sets the MPEG decoder 2 in the mode of generating I-picture only, if the HDD recorder is performing fast-forward playback at, for example, a speed ten times or more times as high as the normal playback speed. In this fast-forward playback at such a speed, the system controller 11 gives the decoder manager 13 the data that represents the intervals at which I-pictures should be read.

At the time it gives the data to the decoder manager 13, the system controller 11 determines whether it is necessary to divide the screen into display sections and to display a plurality of images in the display sections, respectively, when the fast-forward playback is carried out at the speed designated in the instruction. If it is necessary to divide the screen, the system controller 11 determines how many sections the screen should be divided into, from the playback speed designated in the instruction. In this embodiment, the screen is divided into sections if the designated playback speed designated is ten or more times as high as the normal playback speed. More specifically, the screen is divided into six sections if the designated playback speed is 10 to 100 times as high as the normal playback speed, into nine sections if the designated playback speed is 300 to 600 times as high as the normal playback speed, and so forth. The system controller 11 gives the GUI manager 12 the informing presenting how many sections the screen should be divided into (X4 of FIG. 2). On receiving the informing, the GUI manager 12 causes the VGA 2 to display the moving-picture data played back by the decoder manager 13, respectively in the display sections, the number of which is specified in the informing.

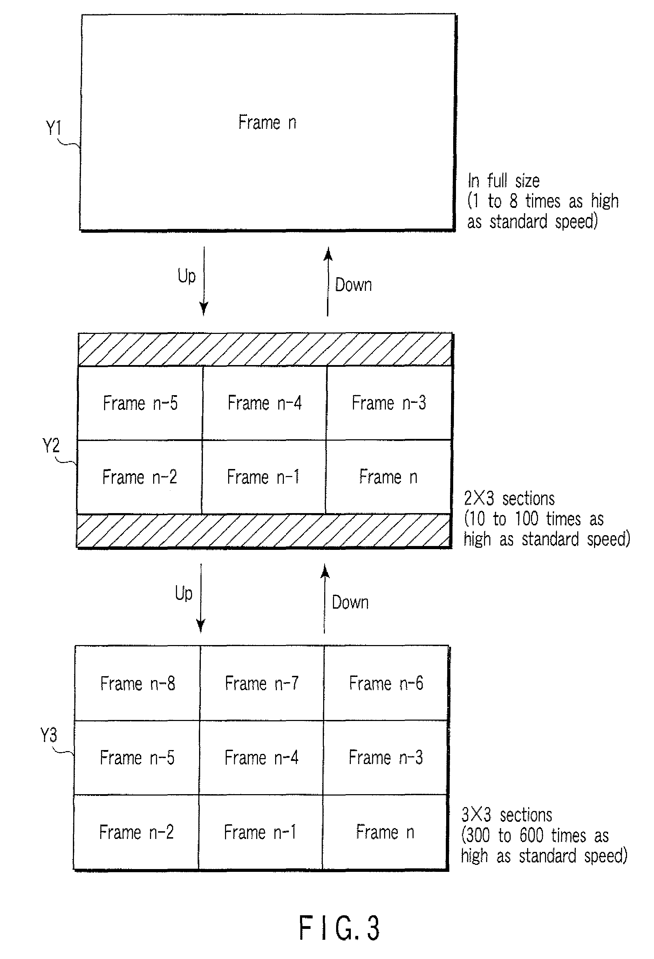

The display screen is divided, not into a fixed number of sections in the fast-forward playback. Rather, as shown in FIG. 3, an image is displayed in the entire screen (Y1) if the fast-forward playback speed, for example, at most eight times as high as the normal playback speed. If the fast-forward playback speed is 10 to 100 times as high as the normal playback speed, the display screen is divided into six sections (2 rows × 3 columns), whereby six images are displayed in time series (Y2), from left to right and from top to bottom. If the fast-forward playback speed is 300 to 600 times as high as the normal playback speed, the display screen is divided into nine sections (3 rows × 3 columns), whereby nine images are displayed in time series (Y3), from left to right and from top to bottom. The displaying of images is thus controlled more appropriately than is possible hitherto. Note, it is assumed that the HDD recorder cannot perform fast-forward playback at any speed between (Y1) and (Y2), (Y2) and (Y3), for example, nine times or 200 times as high as the normal playback speed.

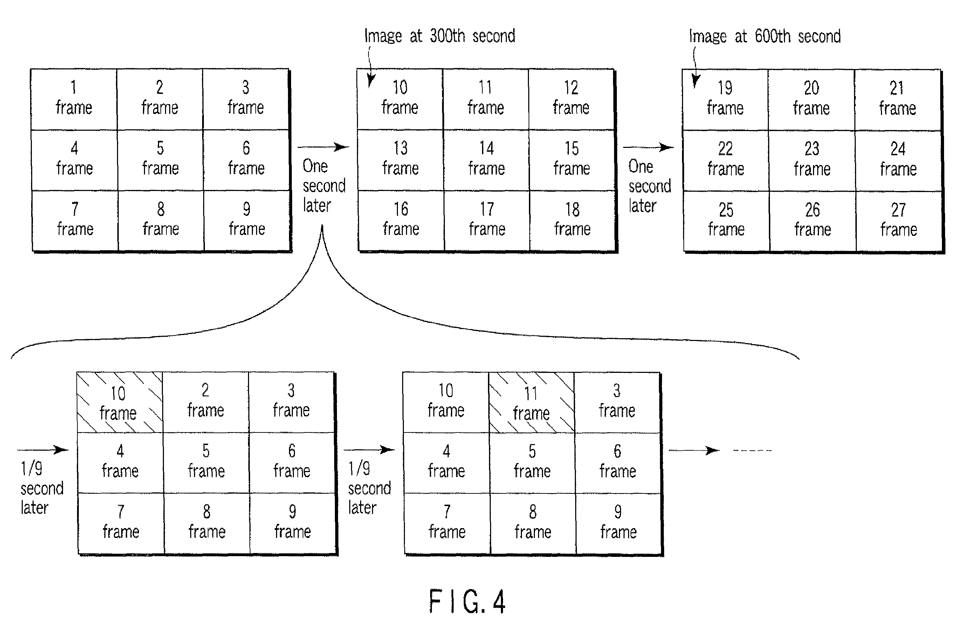

When the HDD recorder carries out the fast-forward playback at, for example, 300 times as high as the normal playback speed, the display screen is divided into nine sections, and nine parts of moving-picture data are displayed in the nine sections, respectively. In this case, the mode of displaying images in the respective sections of the display screen changes with time, as will be explained with reference to FIG. 4. First, nine images, or the first to ninth frames, are displayed in the nine sections. Upon lapse of 1/9 second, the tenth frame for the 300th second replaces the first frame. Upon lapse of next 1/9 second, the eleventh next to the tenth frame replaces the second frame. Hence, the moving-picture data for 5 minutes is displayed for one second. Seeing the moving-picture data thus displayed, the user finds the desire scene. Upon finding the desired scene, the user operates the remote-controller, causing the HDD recorder to resume the standard-speed playback.

During the fast-forward playback at a speed some times as high as the normal playback speed, the time lag between the moment the user thinks he or she finds the desired scene and the moment he or she operates the remote-controller to make the HDD recorder performs an operation. Further, the data part over-taken from the desired scene is too large to neglect. The user cannot help but make the HDD recorder first perform rewinding and then the normal playback. When the user operates the remote controller, thereby interrupting the fast-forward playback performed at a speed many times as high as the normal playback speed, several images being displayed are frozen. The images frozen include some images for any past scenes. In view of this, the HDD recorder is designed to enable the user to select one of the frozen images, with which the normal playback will be started.

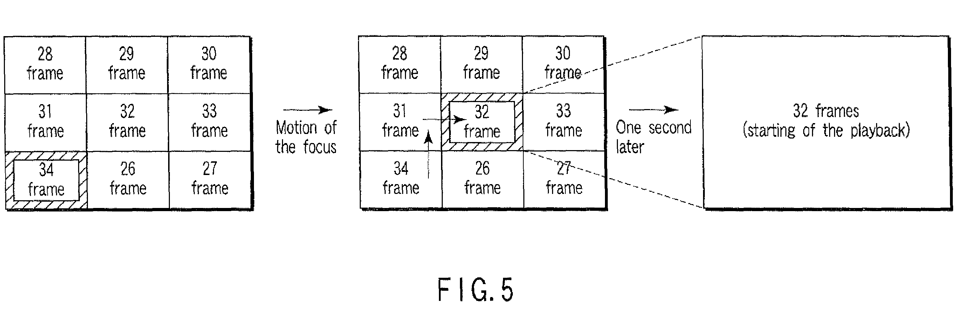

Assume that the user operates the remote controller, stopping the fast-forward playback performed at 300 times as high as the normal playback speed, at the moment the thirty-fourth frame is displayed last as shown in FIG. 5. Also, assume that the thirty-fourth frame is the data part over-taken from the desired scene, i.e., the thirty-second frame. In this case, the user operates the direction button, such as a cross key, provided on the remote controller, thus moving the focus frame from the thirty-fourth frame to the thirty-second frame. Then, the user operates the remote controller, instructing the HDD recorder to start the playback again. On receiving this instruction, the HDD recorder starts the playback not at the thirty-fourth frame, but at the thirty-second frame. Hence, the user need not carry out the rewinding that is a troublesome operation.

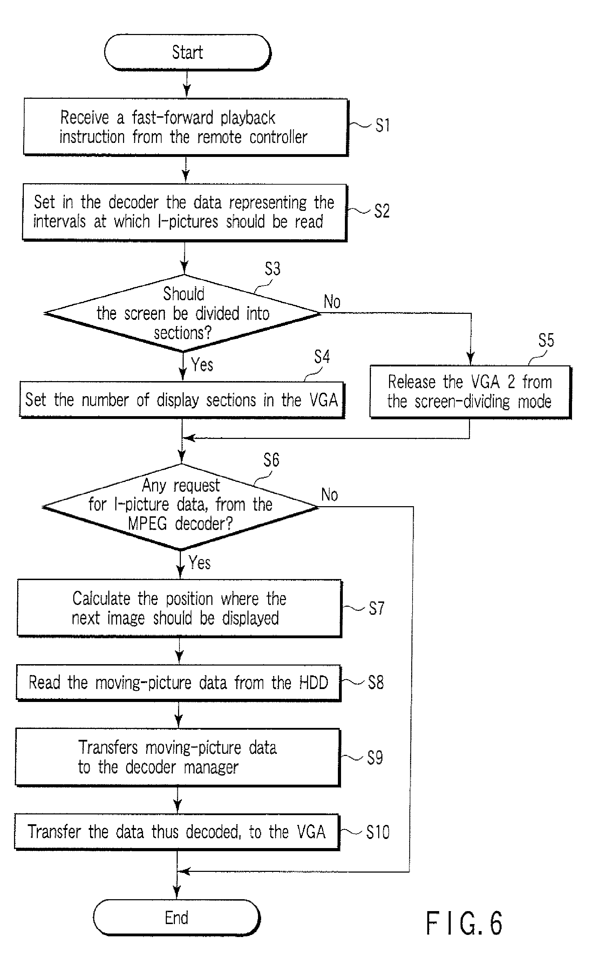

FIG. 6 is a flowchart that represents the sequence of operations that the HDD recorder performs in the fast-forward playback mode.

First, the remote-control manager 15 gives the system controller 11 the data indicating that the infrared-ray-receiving unit 5 has received a fast-forward playback instruction (Step S1). On receiving this data, the system controller 11 gives the decoder manager 13 the instruction that should be set in the MPEG decoder 3 (Step S2). This instruction represents the intervals at which I-pictures should be read to achieve fast-forward playback at the speed designated. Then, the system controller 11 determines whether the display screen should be divided into sections and how many sections the display screen should be divided into, to accomplish the fast-forward playback at the speed designated (Step S3).

If the display screen needs to be divided (if YES in Step S3), the system controller 11 instructs that the GUI manager 12 should set, in the VGA 2, the number of display sections (Step S4). If the display screen need not be divided (if NO in Step S3), the system controller 11 instructs that the GUI manager 12 should release the VGA 2 from the screen-dividing mode (Step S5). The VGA 2 is released from the screen-dividing mode if the fast-forward playback is proceeding at ten times as high as the normal playback speed when the user instructs the HDD recorder to perform the fast-forward playback at, for example, eight times as high as the normal playback speed.

If any request for I-picture data has been sent from the MPEG decoder 3 via the decoder manager 13 (YES of Step S6), the system controller 11 calculates the position in the display screen, where the next image should be displayed in the fast-forward playback performed at the designated speed (Step S7). Then, the system controller 11 instructs the file manager 14 to read moving-picture data from the HDD 4 (Step S8). The system controller 11 then transfers the moving-picture data to the decoder manager 13 so that the MPEG decoder 3 may play back the moving-picture data (Step S9). The MPEG decoder 3 decodes the moving-picture data. The data thus decoded is transferred to the GUI manager 12 so that the VGA 2 may control the displaying of the data (Step S10).

If no requests for I-picture data have been sent from the MPEG decoder 3 via the decoder manager 13 for a preset time (if NO in Step S6), the system controller 11 stops the fast-forward playback.

As has been described, with this HDD recorder it is possible to display one image in full size in the fast-forward playback performed at a speed lower than a specific value. And it is possible to display the parts of an image in divided sections of the display screen, respectively, in the fast-forward playback performed at a speed equal to or higher than the specific value. How many sections the display section should be divided into depends on the speed at which the fast-forward playback is carried out. In the fast-forward playback, the user can selects a desired one of the images frozen in the display screen, as a point at which the fast-forward playback is started again.

## Claims

1. An image playback apparatus **characterized by** comprising:
playback means (13) for playing back encoded moving-picture data;
first display means (12) for displaying the moving-picture data played back by the playback means, using an entire display region;
second display means (12) for displaying, in time series, parts of the moving-picture data played back by the playback means, respectively in display sections into which the display region has been divided;
designating means (15) for designating a playback speed at which the playback means should play back the moving-picture data; and
display control means (11) for controlling the first and second display means so that the first display means displays the moving-picture data in the entire display region when the designating means designates a playback speed which is lower than a specific value, and the second display means displays the parts of the moving-picture data in display sections, respectively, when the designating means designates a playback speed equal to or higher than the specific value.

2. The image playback apparatus according to claim 1, **characterized in that** the second display means includes means for setting a number of sections into which the display region should be divided.

3. The image playback apparatus according to claim 1, **characterized in that** the second display means divides the display region into sections which are arranged in the form of a matrix and displays the parts of the moving-picture data played back by the playback means, cyclically in a predetermined order, respectively in the sections of the display region.

4. The image playback apparatus according to claim 1, **characterized in that** the display control means determine how many sections the display region should be divided into, from the playback speed designated by the designating means, and sets the number of sections thus determined, in the second display means.

5. The image playback apparatus according to claim 4, **characterized in that** the display control means increases the number of sections into which the display region is divided, in stepwise manner as the playback speed designated by the designating means increases.

6. The image playback apparatus according to claim 4, **characterized in that** the display control means decreases the number of sections into which the display region is divided, in stepwise manner as the playback speed designated by the designating means decreases.

7. The image playback apparatus according to claim 1, **characterized by** further comprising:
playback-interrupting means (11) for interrupting the playback of moving-picture data, performed by the playback means;
selecting means (15) for selecting a desired one of the parts of moving-picture data which are displayed in time series in the parts of the display region, while the playback-interrupting means is interrupting the playback of moving-picture data; and
playback-resuming means (11) for causing the playback means to start playing back the moving-picture data again at a standard playback speed, from that part of moving-picture data, which has been selected by the selecting means.

8. The image playback apparatus according to claim 7, **characterized in that** the display control means controls the first and second display means so that the displaying of moving-picture data in the sections of the display region, achieved by the first display means, is switched to the displaying of the display of the data in the display region, achieved by the second display means, when the playback-resuming means causes the playback means to start playing back the moving-picture data again at the standard playback speed.

9. An image playback method **characterized by** comprising the steps of:
receiving (S1) speed data representing a playback speed at which encoded moving-picture data should be played back;
displaying (S5) the moving-picture data in an entire display region, when the playback speed represented by the speed data is lower than a specific value; and
displaying (S4) parts of the moving-picture data, in time series, respectively in display sections prepared by dividing the display region, when the playback speed represented by the speed data is equal to or higher than the specific value.

10. The image playback method according to claim 9, **characterized in that** the number of sections into which the display region is divided in stepwise manner as the playback speed represented by the speed data increases.

11. The image playback method according to claim 9, **characterized by** further comprising the steps of:
interrupting the playback of moving-picture data while the parts of moving-picture data are being displayed in the display sections,
selecting a desired one of the parts of moving-picture data while the parts of moving-picture data are being displayed in time series, and
restarting the playback of the moving-picture data at a standard playback speed, from that part of moving-picture data which has been selected.
